# FASCICULE DE BREVET EUROPEEN

(11) **EP 0 657 239 B1**
(45) Date de publication et mention de la délivrance du brevet: **04.09.1996**
(21) Numéro de dépôt: 94402733.3
(22) Date de dépôt: 30.11.1994
(51) Int. Cl.: B23B 51/02, B23C 5/10

(54) **Foret de perçage à tête hémisphérique à coupe évolutive**
Kugelkopfbohrer mit veränderlichem Schneidwinkel
Ballnose drill with variable cutting angle

(30) Priorité: 08.12.1993 FR 9314697
(43) Date de publication de la demande: 14.06.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Cabaret, Maurice Jean, F-77310 Ponthierry (FR); Leboulanger, Jean Pierre, F-77590 Chartrettes (FR); Daude, Christian Thierry, F-77000 Vaux Le Penil (FR); Lebrun, Michel, F-77133 Machault (FR); Lavocat, Daniel Marcel Eugène, F-91610 Ballancourt (FR); Masson, François, F-91000 Evry (FR); Rouge, Gilles, F-91410 Dourdan (FR); Roy, Bernard Gilbert, F-89710 Volgre (FR)

(56) Documents cités:
- DE-U- 1 863 075
- US-A- 4 712 948

## Description

La présente invention concerne un foret de perçage adapté à des conditions de travail difficiles.

Il est courant et connu depuis longtemps d'utiliser des forets hélicoïdaux à plusieurs lèvres de coupe pour réaliser des opérations de perçage. Comme il est connu, les lèvres s'étendent radialement depuis le centre de la tête du foret, situé dans l'axe du foret, jusqu'à la périphérie. Chaque arête de coupe de lèvre se prolonge vers l'extérieur du foret par un bord de coupe hélicoïdal ou listel qui se situe en arrière, par rapport au sens de rotation du foret, d'une gorge de forme hélicoïdale. Un tel foret est connu par exemple du document US-A-4.712.948 qui corresponde au préambule de la revendication 1.

Pour l'usinage de certains matériaux, tels qu'ils sont notamment utilisés dans les applications aux moteurs aéronautiques ou turboréacteurs et qui comprennent des superalliages à base de nickel ou de cobalt ou des aciers fortement alliés présentant de hautes caractéristiques mécaniques de résistance et une dureté élevée, il est par ailleurs connu de remplacer le matériau d'outils coupants dit en acier rapide par un carbure de tungstène ou matériau analogue, par exemple du type céramique.

Malgré ces améliorations et adaptations connues, un problème est resté mal résolu dans les applications rappelées ci-dessus. Du moins les solutions retenues imposent plusieurs opérations successives faisant appel à plusieurs outils différents successifs pour obtenir un alésage de qualité satisfaisant les critères rigoureux exigés notamment dans les applications aéronautiques, lors de la réalisation d'un perçage. Ces difficultés apparaissent notamment lorsque la face d'attaque du perçage sur la pièce ne correspond pas à un plan perpendiculaire à l'axe géométrique de l'alésage à obtenir ou axe de l'outil, cette face présentant par exemple une pente, un congé arrondi ou un chanfrein extérieur.

Un foret de perçage répondant à ces conditions de manière satisfaisante sans les inconvénients des solutions connues antérieures est caractérisé en ce que la tête du foret présente une forme générale hémisphérique et comporte quatre lèvres de coupe dont deux lèvres sont disposées en fil à fil, l'angle de coupe de l'arête desdites lèvres étant évolutif et variant de zéro degré au sommet du foret situé sur son axe géométrique jusqu'à une valeur déterminée expérimentalement en fonction du matériau à usiner au point où l'arête de coupe recoupe l'extrémité du diamètre à l'extérieur du foret.
Avantageusement, une variation de l'angle de coupe de zéro à une valeur comprise entre dix et douze degrés peut être retenue dans le cas d'applications à l'usinage de pièces en superalliage, notamment à base de nickel ou alliages de titane.
D'autres caractéristiques et avantages de l'invention seront mieux compris à la lecture de la description qui va suivre d'un mode de réalisation de l'invention, en référence aux dessins annexés sur lesquels :
- la figure 1 représente une vue de face du foret de perçage conforme à l'invention;
- la figure 2 représente une vue du sommet du foret de perçage représenté sur la figure 1;
- la figure 3 représente un détail de la partie coupante du foret de perçage représenté sur la figure 1;
- la figure 4 représente un détail d'arête de coupe du foret de perçage représenté sur la figure 1;
- la figure 5 représente une vue en coupe selon la ligne V-V de la figure 1 du foret de perçage.
- les figures 6 et 7 représentent en coupe deux exemples de pièce usinées au moyen d'un foret conforme à l'invention.

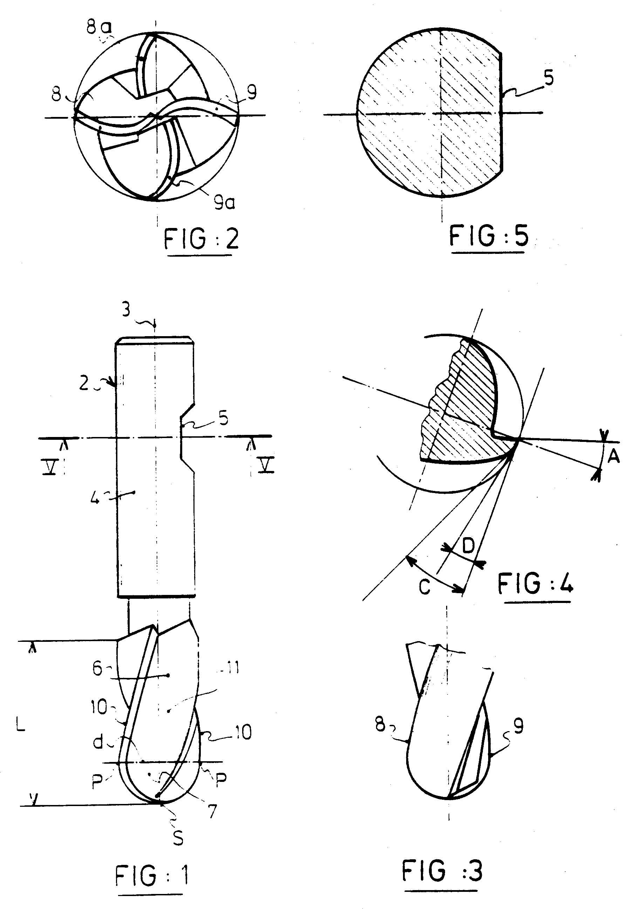

Un foret de perçage 1 conforme à l'invention, représenté sur la figure 1 comprend un corps en matériau du type à base de carbure de tungstène, inscrit dans un cylindre 2 d'axe géométrique 3. Dans le mode de réalisation pris en exemple, le choix du matériau du foret convient au matériau à usiner du type superalliage mais pour des matériaux à usiner différents, un matériau différent peut être utilisé pour le foret, tel que acier rapide ou matériau analogue ou un matériau du type céramique.
De manière classique, le corps du foret 1 comporte une première partie correspondant à la queue 4 destinée à permettre le montage du foret dans un mandrin de machine. Dans l'exemple représenté sur les dessins, la queue 4 comporte un plat 5, comme le montre la figure 5, permettant le blocage d'outil.

Une deuxième partie 6 du foret correspond à la partie coupante définie par la longueur d'affûtage L. L'extrémité 7 ou tête de la partie coupante 6 du foret présente une forme hémisphérique comportant un sommet S placé sur l'axe géométrique du foret 1 et un cercle de base dont le diamètre d recoupe le cylindre dans lequel s'inscrit la partie coupante 6 aux points P dans le plan de la figure 1.

Comme le montrent les figures 1 à 3, la tête 7 du foret comprend quatre lèvres dont deux 8 et 9 sont disposées fil à fil au sommet S, comme cela est visible sur la figure 2, les deux autres lèvres 8a et 9a étant interrompues au voisinage du sommet S.

De manière remarquable et conforme à l'invention, l'angle de coupe A de l'arête desdites lèvres, égal à 0 degré au sommet S, varie de manière évolutive jusqu'à atteindre 10 degrés au point P comme le montre la figure 4. De manière analogue et correspondante, dans l'exemple représenté, l'angle de dépouille D varie également de manière évolutive en sens inverse par exemple de 8 degrés au sommet S jusqu'à 6 degrés au point P. L'angle C de contre-dépouille peut varier en fonction du diamètre du foret de 12 à 20 degrés par exemple.

La valeur évolutive de ces angles est déterminée expérimentalement suivant les applications en fonction de la nature du matériau à usiner. Les valeurs indiquées conviennent pour l'usinage de pièces en superalliage, notamment à base de nickel ou alliages de titane.
Chaque arête de coupe de lèvre se prolonge sur la longueur L de la partie coupante 6 du foret 1 par le bord de coupe d'un listel 10 hélicoïdal, deux listels 10 voisins étant séparés par une gorge 11 hélicoïdale, l'angle de coupe conservant par exemple la valeur atteinte au point P. Le bord de listel comporte une zone d'environ 0,2 à 0,3 mm de largeur constituant un témoin cylindrique. Dans l'exemple représenté sur les dessins, l'angle d'hélice est de 30 degrés, cet angle d'hélice pouvant varier en fonction du type de matériau à percer.

Le foret conforme à l'invention qui vient d'être décrit en référence aux figures 1 à 5, permet, grâce à ses caractéristiques remarquables qui ont été notées ci-dessus, d'obtenir une pénétration améliorée du foret suivant son axe géométrique 3 et notamment dans des conditions où la géométrie de la face d'attaque sur la pièce à usiner rend difficilement réalisable en assurant une qualité satisfaisante un perçage direct au diamètre demandé. C'est notamment le cas lorsque cette face d'attaque présente une pente par rapport au plan perpendiculaire à l'axe géométrique du perçage à obtenir ou un congé, un chanfrein. Des forets de diverses dimensions ont été réalisés conformément à l'invention, notamment à partir d'un diamètre de 3 mm.

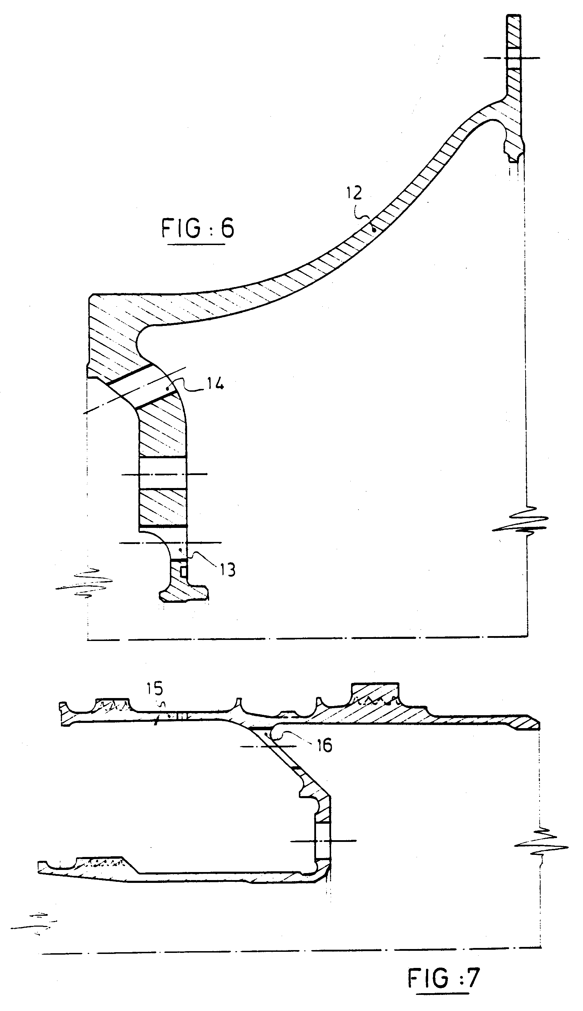

La figure 6 montre un exemple d'application où un foret conforme à l'invention permet sur une pièce de révolution 12 d'effectuer le perçage de deux séries de 40 trous, respectivement 13 et 14 en une seule opération alors que la méthode antérieure imposait l'utilisation de plusieurs outils et nécessitait un temps d'opération sensiblement double de la solution appliquée grâce à l'invention. Un seul perçage permet d'obtenir la cote finie en respectant les critères imposés de qualité et notamment une bonne précision géométrique et un état de surface de Ra égal à O,9 est obtenu.

La figure 7 montre un autre exemple d'application suivant lequel 24 trous 16 sont percés aux cotes finies en un seul passage au moyen d'un foret conforme à l'invention avec des résultats de qualité satisfaisante, malgré la présence d'une toile à percer de faible épaisseur et une géométrie complexe de face d'attaque, comportant en outre la proximité d'un diamètre interne de partie annulaire de pièce.

## Revendications

1. Foret de perçage à gorges hélicoïdales ayant une extrémité coupante (7) ou tête du foret (1) qui présent une forme générale hémisphérique caractérisé en ce que le foret comporte quatre lèvres de coupe dont deux lèvres (8, 9) sont disposées fil à fil, au sommet S du foret, l'angle de coupe A de l'arête desdites lèvres étant évolutif et variant de zéro degré au sommet S du foret (1) situé sur son axe géométrique jusqu'à une valeur déterminée expérimentalement en fonction du matériau à usiner au point (P) où l'arête de coupe recoupe l'extrémité du diamètre (d) à l'extérieur du foret, tandis que l'angle de dépouille D présente une variation correspondante en sens inverse, du sommet S au point P.

2. Foret de perçage selon la revendication 1 destiné à l'usinage de matériaux métalliques tels que superalliages, notamment à base de nickel ou alliages de titane dans lequel la valeur de l'angle de coupe audit point P atteint dix à douze degrés.

## Claims

1. Drill bit with helical flutes having a cutting end (7) or drill head (1) which has a hemispherical overall shape, characterized in that the drill bit has four cutting lips, of which two lips (8, 9) are arranged so as to run on from one another at the tip S of the drill bit, the rake A of the edge of the said lips being progressive and varying from zero degrees at the tip S of the drill bit (1) situated on its geometric axis up to a value which is determined experimentally as a function of the material to be machined at the point (P) where the cutting edge intersects with the end of the diameter (d) on the outside of the drill bit, whereas the primary clearance angle D has a corresponding variation in the opposite direction, from the tip S to the point P.

2. Drill bit according to Claim 1 intended for machining metallic materials such as superalloys, especially ones based on nickel or titanium alloys in which the magnitude of the rake at the said point P is as much as ten to twelve degrees.

## Patentansprüche

1. Bohrer mit spiralförmigen Kehlen,
mit einem schneidenden Endbereich (7) oder Kopf des Bohrers (1), der im wesentlichen die Form einer Halbkugel besitzt,
dadurch gekennzeichnet,
daß der Bohrer vier Schneidlippen aufweist, von denen zwei (8, 9) an der Bohrerspitze Kante an Kante angeordnet sind,
daß sich der Schneidwinkel (A) der Kante der Schneidlippen fortlaufend ändert und von 0° an der Spitze (S) des Bohrers, die auf seiner geometrischen Achse liegt, bis zu dem Punkt (P), an dem die Schneidkante das Ende des Durchmessers (d) an der Außenseite des Bohrers durchdringt, auf einen Wert variiert, der in Abhängigkeit von dem zu bearbeitenden Material experimentell bestimmt ist, während der Freiwinkel (D) von der Spitze (S) zu dem genannten Punkt (P) eine korrespondierende Änderung in entgegengesetzter Richtung aufweist.

2. Bohrer nach Anspruch 1 zur Bearbeitung von metallischen Werkstoffen, wie Superlegierungen, insbesondere auf Nickelbasis oder Titanlegierungen, wobei der Wert des Schneidwinkels an dem genannten Punkt (P) 10° bis 12° erreicht.
